# EUROPEAN PATENT SPECIFICATION

(11) **EP 0 560 414 B1**
(45) Date of publication and mention of the grant of the patent: **05.03.1997**
(21) Application number: 93109209.2
(22) Date of filing: 30.04.1990
(51) Int. Cl.: H01M 4/74, H01M 2/28

(54) **Lead-acid battery plate**
Bleisäure-Batterie-Platte
Plaque pour batterie au plomb

(43) Date of publication of application: 15.09.1993
(62) Divisional of application: 90304665.4
(73) Proprietor: YUASA CORPORATION, Takatsuki-shi, Osaka 569 (JP)
(72) Inventor: Senoo, Keiji, c/o Yuasa Battery Co., Ltd., Takatsuki-shi, Osaka (JP); Yoshida, Takamasa, c/o Yuasa Battery Co., Ltd., Takatsuki-shi, Osaka (JP); Ishikawa, Hideharu, c/o Yuasa Battery Co., Ltd., Takatsuki-shi, Osaka (JP); Takura, Masao, c/o Yuasa Battery Co., Ltd., Takatsuki-shi, Osaka (JP)
(74) Representative: Linn, Samuel Jonathan

(56) References cited:
- EP-A- 0 124 745
- DE-A- 2 404 650
- PATENT ABSTRACTS OF JAPAN vol. 10, no. 117 (E-400)(2174) 2 May 1986 & JP-A-60253160
- PATENT ABSTRACTS OF JAPAN vol. 12, no. 393 (E-670)(3240) 19 October 1988 & JP-A-63133453
- PATENT ABSTRACTS OF JAPAN vol. 14, no. 354 (E-958)(4297) 31 July 1990 & JP-A-2123666
- PATENT ABSTRACTS OF JAPAN vol. 14, no. 359 (E-959)(4302) 3 August 1990 & JP-A-2126557

## Description

This invention relates to a lead-acid battery plate making use of copper for a grid.

Generally, lead alloy has been used for a grid for a lead-acid battery plate.

In a lead-acid battery making use of such a plate, however, the electric resistance of the lead alloy is as high as about 21 micro ohm-cm, so that ohmic resistance polarization due to grid resistance becomes so large as to cause a drop in discharge voltage when the battery is discharged with a large current. Moreover, the specific gravity of the lead alloy is as large as 11 so that weight efficiency is low. Furthermore, when the height of the plate increases the grid resistance has a large influence on battery characteristics, so that only an upper part of the plate, which is provided with a plate lug, is concerned with charge and discharge reactions and the lower part thereof is not involved. For this reason, a grid made of lead alloy has not been suitable for use in a tall plate as required in a large lead-acid battery.

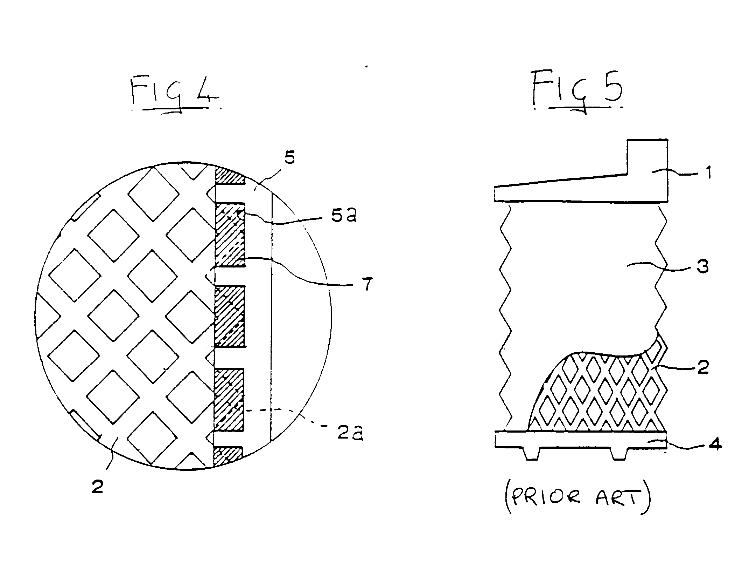

In view of the above, the use of copper, which has better electric conductivity than lead alloy, has been proposed, and a plate, as illustrated in Fig. 5, making use of an expanded metal comprising copper as the grid has been adopted.

The battery plate illustrated in Fig. 5 comprises a plate lug 1 of lead alloy, a grid 2 made of an expanded metal of copper on which lead alloy or lead tin alloy is electroplated, a negative active material 3, and a lower connection body 4. The reason why the lead alloy or lead-tin alloy is electroplated on the grid 2 is that copper itself dissolves in the electrolyte of the battery, causing an increase in self-discharge, a reduction in capacity, and a lowering of charging efficiency etc.

However, since the electroplated lead layer is soft, it is especially apt to be scratched where it covers the side of the grid during subsequent pasting operations and other processes so that the copper is exposed and the foregoing problem arises. Another problem which arises is that the active material 3, adhering to the side of the grid slumps or falls down during operation of the battery and becomes a sponge-like shape liable to cause short-circuiting so that the service life of the battery is exhausted in a short period. A method has been proposed whereby the active material 3 adhering to the side of the grid is removed in a later process in order to avoid this short-circuit. However, this adds to the number of processes involved and the electroplated layer has sometimes still been scratched to expose the copper in this method.

It is known from, for example, JP-A-60233160, DE-A-2404650 and EP-A-0124745 to apply a plastics protector to a peripheral region of a battery plate.

An object of the invention is to provide a lead-acid battery plate which avoids the above discussed problems and also allows for a high rate of production.

This invention provides a lead-acid battery plate making use of an expanded metal comprising copper or copper alloy electroplated with lead or lead alloy as its grid, but characterized in that a protector is provided on at least one side edge of the grid. The protector is fitted to the grid either by projecting positions of the grid being inserted into respective recesses formed in the protector or by the protector having plural projections which are connected to the side edge margins of the grid.

The invention will be described further, by way of example, with reference to the accompanying drawings, in which:
Fig. 1 is a partially cut-away view of a lead-acid battery plate according to this invention;
Fig. 2 is a partially cut-away view of the same plate in the direction of arrow II in Fig. 1;
Fig. 3 is an enlarged view showing the fitting of a protector in the lead-acid battery of Fig. 1;
Fig. 4 is an enlarged view showing an embodiment which has different means of fitting the protector; and
Fig. 5 is a partially cut-away view of a conventional lead-acid battery plate, as already mentioned.

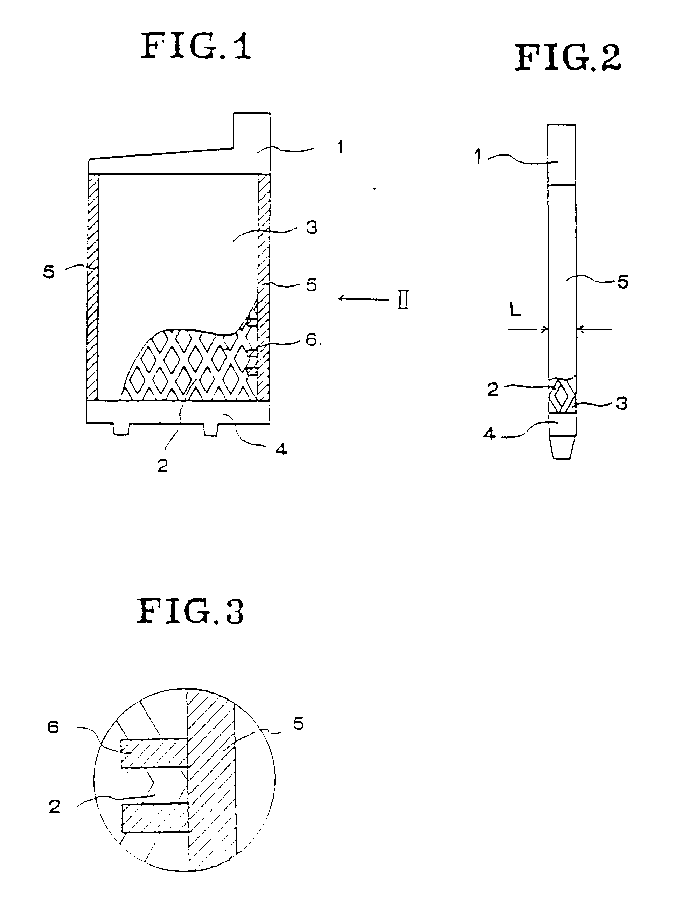

The lead-acid battery plate shown in Figs 1 and 2 comprises a plate lug 1 formed of lead alloy, a grid 2 consisting of lead plated onto a copper expanded metal, a negative active material 3, a lower connection body 4 made of synthetic resin, and two protectors 5 of lead alloy. Projections 6 are formed on the protectors 5 at plural places. Each protector 5 is a narrow strip-like body having an area sufficient to cover an entire side surface of the grid 2, and its width (L of Fig. 2) is larger than the thickness of the grid 2.

Such a plate is manufactured, for example, as follows. A sheet of copper is first subjected to expansion work (i.e. stamping or cutting and stretching) to form a mesh known as a copper expanded metal. This metal is then subjected to degreasing, acid treatment, cleaning, drying and soldering work in that order.

Finally, it is electroplated with lead, and the grid 2 is thus obtained. The plate lug 1 is connected by casting to an upper part of the grid 2, and the lower connection body 4 is then fitted to a lower part of the grid 2. The protectors 5 are then fitted to sides of the grid 2 by the projections 6 thereof being connected to the grid 2 by means of solder of lead-tin alloy, in the arrangement illustrated in Fig.3. The sequence of electroplating lead on the copper expanded metal and then connecting the plate lug 1, the lower connection body 4 and the protector 5 is not limited to the foregoing. The copper expanded metal may be electroplated with lead after connecting the protectors 5 thereto, and, for example, the plate lug 1 may be cast and the lower connection body 4 may be fitted to the said expanded metal after the protectors 5 are connected.

Further, the expanded metal may be plated with lead after the plate lug 1 and the protectors 5 are connected thereto, and the lower connection body 4 may be fitted afterwards. Subsequently, the active material 3 is pasted onto the grid 2 by a conventional method.

In the lead-acid battery plate having such a structure, since each protector 5 provided on the side of the grid 2, has a width (L of Fig. 2) larger than the thickness of the grid 2, the copper is not so vulnerable to being exposed due to scratching of the lead layer of the grid 2, especially when pasting the active material 3. Further, since the active material 3 can be pasted on the basis of the protector 5, the grid 2 is covered with the active material 3 and the lead layer is not prone to react during charging and discharging so that the copper is not vulnerable to being exposed due to breakdown of the layer during operation of battery. Moreover, since the active material 3 can be pasted on the basis of the protector 5, the ease of application of the paste and the rate of production of plates can be improved considerably. Furthermore, since the grid 2 is made of copper, the charging voltage characteristic and the weight efficiency are excellent.

Incidentally, in alternative embodiments the plate lug 1 may be made of lead, the basic grid 2 may be made of copper alloy, the lower connection body 4 may be made of lead or lead alloy, and the grid 2 may be electroplated with lead alloy, in any combination or in combination with any of the previously mentioned materials.

The protectors 5 may be provided on only a part, possibly only a central part, of the grid 2.

As alternatives to the above mentioned lead alloy, the protectors 5 may be made of lead or of synthetic resin. A synthetic resin protector 5 may be fitted to the side of the grid 2, through the projections 6, by means of thermal adhesion of adhesion utilizing ultrasonic waves hot-melt or epoxy resin etc.

Each protector 5 may be fitted to the grid 2 by inserting angular projecting portions 2a at the edge of the grid 2 into respective recesses 5a formed on the protector 5 and using a solder or a resin 7, as illustrated by Fig. 4.

With any version of lead-acid battery plate as described above, scratching of the electroplated layer at the side of the grid 2 can be avoided in later processes because the protectors 5 are provided on the sides of the grid 2. Consequent increase in self-discharge, reduction in capacity and lowering of charging efficiency due to exposed copper can, accordingly, be substantially avoided. Further, since the active material 3 can be pasted on on the basis of the protectors 5, the exposure of copper during operation of the battery can be prevented and the rate of application of paste, i.e. the rate of production of such plates can be improved. When the width (L of Fig. 2) of the protectors 5 is set at more than the thickness of the grid 2, the scratching of the electroplated layer of the grid 2 is most reliably avoided, i.e. the risk of copper being exposed at the time when the active material 3 is pasted is avoided.

Since the protectors 5 may be made of any of synthetic resin, lead or lead alloy, these materials can be used, as appropriate, depending on the proposed application of the plate. Furthermore, when the protectors 5 are fitted to the grid 2 by fitting the angular projecting portions 2a of the grid 2 side into the recesses 5a or by fixing the projections 6 onto the side of the grid 2, the protector 5 can be fitted to the grid 2 firmly and the fitting work can be done easily.

## Claims

1. A lead-acid battery plate making use of an expanded metal comprising copper or copper alloy electroplated with lead or lead alloy as a grid (2), characterized in that a protector (5) is provided on at least one side edge of the grid (2), said protector (5) being fitted to the side edge of the grid (2) by having projecting portions (2a) of the grid (2) inserted into respective recesses (5a) formed in the protector (5).

2. A lead-acid battery plate making use of an expanded metal comprising copper or copper alloy electroplated with lead or lead alloy as a grid (2), characterized in that a protector (5) is provided on at least one side edge of the grid (2), said protector (5) being fitted to the side edge of the grid (2) by having plural projections (6) which are connected to the side edge of the grid (2).

3. A battery plate according to claim 1 or 2, wherein the protector (5) is made of synthetic resin, lead or lead alloy.

4. A battery plate according to claim 1 or 2, wherein the width of the protector (5), measured in the direction of the depth of the grid (2), is larger than the thickness of the grid (2).

## Patentansprüche

1. Bleisäurebatterie-Platte, für die ein Streckmetall verwendet wird, umfassend mit Blei oder Blei-Legierung elektroplattiertes Kupfer oder Kupfer-Legierung als ein Gitter (2), dadurch gekennzeichnet, daß an wenigstens einer Seitenkante des Gitters (2) eine Schutzvorrichtung (5) bereitgestellt wird, wobei die Schutzvorrichtung (5) derartig an der Seitenkante des Gitters (2) angebracht wird, daß hervortretende Anteile (2a) des Gitters (2) in die entsprechende Aussparungen (5a), die in der Schutzvorrichtung (5) ausgebildet sind, eingefügt werden.

2. Bleisäurebatterie-Platte, für die ein Streckmetall verwendet wird, umfassend mit Blei oder Blei-Legierung elektroplattiertes Kupfer oder Kupfer-Legierung als ein Gitter (2), dadurch gekennzeichnet, daß an wenigstens einer Seitenkante des Gitters (2) eine Schutzvorrichtung (5) bereitgestellt wird, wobei die Schutzvorrichtung (5) derartig an der Seitenkante des Gitters (2) angebracht wird, daß sie mehrfache hervortretende Anteile (6) aufweist, die mit der Seitenkante des Gitters (2) verbunden werden.

3. Batterie-Platte gemäß Anspruch 1 oder 2, worin die Schutzvorrichtung (5) aus synthetischem Harz, Blei oder Blei-Legierung besteht.

4. Batterie-Platte gemäß Anspruch 1 oder 2, worin die Breite der Schutzvorrichtung (5), gemessen in der Richtung der Tiefe des Gitters (2), größer ist als die Dicke des Gitters (2) .

## Revendications

1. Plaque pour batterie au plomb utilisant un métal expansé comportant du cuivre ou un alliage de cuivre galvanisé avec du plomb ou un alliage de plomb comme grille (2), caractérisée en ce qu'un protecteur (5) est prévu sur au moins un bord latéral de la grille (2), ledit protecteur étant adapté au bord latéral de la grille (2) en insérant des parties saillantes (2a) de la grille (2) dans des évidements respectifs (5a) ménagés dans le protecteur (5).

2. Plaque pour batterie au plomb utilisant un métal expansé comprenant du cuivre ou un alliage de cuivre galvanisé avec du plomb ou un alliage de plomb comme grille (2), caractérisée en ce qu'un protecteur (5) est prévu sur au moins un bord latéral de la grille (2), ledit protecteur (5) étant adapté au bord latéral de la grille (2) en ayant plusieurs saillies (6) qui sont reliées au bord latéral de la grille (2).

3. Plaque pour batterie selon la revendication 1 ou 2, dans laquelle le protecteur (5) est réalisé en résine synthétique, en plomb ou en alliage de plomb.

4. Plaque pour batterie selon la revendication 1 ou 2, dans laquelle la largeur du protecteur (5), mesurée dans la direction de la profondeur de la grille (2), est plus grande que l'épaisseur de la grille (2).
